# EUROPEAN PATENT SPECIFICATION

(11) **EP 1 289 224 B1**
(45) Date of publication and mention of the grant of the patent: **30.11.2005**
(21) Application number: 02019191.2
(22) Date of filing: 02.09.2002
(51) Int. Cl.: H04L 29/06, H04L 29/08, H04L 12/28, H04Q 7/38, H04Q 7/32

(54) **Communication terminal device for retrieving information comprising a base unit and a remote unit**
Kommunikationsendgerät zum Abrufen von Informationen mit einer Basiseinheit und einer entfernten Einheit
Dispositif terminal de communication pour retrouver des informations constitué d'une unité de base et d'une unité distante

(30) Priority: 04.09.2001 JP 2001266626
(43) Date of publication of application: 05.03.2003
(73) Proprietor: SHARP KABUSHIKI KAISHA, Osaka 545-0013 (JP)
(72) Inventor: Nakatomo, Tomonori, Katano-shi, Osaka (JP)
(74) Representative: Müller - Hoffmann & Partner

(56) References cited:
- EP-A- 0 836 145
- WO-A-01/03353
- DE-A- 19 803 019
- HOUSEL B C ET AL: "WEBEXPRESS: A CLIENT/INTERCEPT BASED SYSTEM FOR OPTIMIZING WEB BROWSING IN A WIRELESS ENVIRONMENT" MOBILE NETWORKS AND APPLICATIONS, BALTZER SCIENCE PUBLISHERS, BUSSUM, NL, vol. 3, no. 3, 1998, pages 419-431, XP000998754 ISSN: 1383-469X

## Description

### BACKGROUND OF THE INVENTION

### Field of the Invention

The present invention relates to a communication terminal device composed of a base unit connected to a server by way of a communication network and at least one remote unit connected to the base unit wherein both the base and remote units permit the user to retrieve information via the Internet.

### Description of the Prior Art

In recent years, access to the Internet by the use of a personal computer, PDA (personal digital (or data) assistant), cellular telephone or microcellular telephone (such as one for the Personal Handyphone System, or PHS, used in Japan), or the like has been becoming increasingly widespread and is nowadays acknowledged as one of the established means of information retrieval. In addition, stationary telephones incorporating a browsing function (hereinafter called browser-equipped telephones) have recently started appearing on the market, making access to the Internet increasingly popular with people who have no personal computer or mobile telephone.

The browser-equipped telephone mentioned above permits the user, when he or she has acquired an account from a telecommunications carrier or Internet service provider (hereinafter called a service provider or the like), access to the Internet via a WWW (worldwide web) server administered by the service provider or the like, just as in access to the internet by the use of a personal computer or the like.

It is true that the browser-equipped telephone described above permits the user access to the Internet by the use of the stationary telephone with which the user is quite familiar from everyday use, greatly contributing to the user's convenience. In particular, with a browser-equipped extension telephone composed of a base unit and a remote unit, both the base and remote units permit access to the Internet. This saves the user, when he or she wants to retrieve information via the Internet, the trouble of going over to the place where the base unit is installed, greatly enhancing the usability of the telephone.

However, in a conventional browser-equipped extension telephone, the information (for example, resources themselves such as characters, images, music, and the like, and bookmarks containing URLs (uniform resource locators) pointing to such resources) retrieved via the Internet by either a base unit or a remote unit cannot be shared between them. Thus, even when a piece of information of which the retrieval is requested on the remote unit has already been retrieved on the base unit, the remote unit needs to retrieve the requested information via the Internet again; likewise, even when a piece of information of which the retrieval is requested on the base unit has already been retrieved on the remote unit, the base unit needs to retrieve the requested information via the Internet again.

Retrieving information again requires connection with a communication network, meaning that the user has to bear the time and cost required to get connected to the network and authenticated for access. The user may need even to enter a URL manually, which involves a very complicated operation. Moreover, from the viewpoint of the communication network, access to the same information by the base and remote units entails two separate sessions of communication, leading to increased traffic.

Further information regarding the prior art can be found in EP 0 836 145 which teaches a method for transferring and displaying data pages on a data network. It is taught that the apparent speed of a connection between a browser at a user station and a proxy or gateway on a network such as the Internet is increased by providing a local proxy at the user station which interacts with a remote proxy. While the remote proxy is retrieving a newly requested World Wide Web page, for example, from the appropriate content provider, it may also be sending to the local proxy a stale cached version of that page. When the new version of the page is finally retrieved, the remote proxy determines the differences between the new version and the stale version, and, assuming the differences do not exceed the new page in size, sends the differences to the local proxy which then reconstructs the new page from the differences and the stale version. The local proxy delivers the new page to the browser, which need not even be aware that a local proxy exists; it is aware only that it received the page it requested. Because computational speed and power are frequently higher and cheaper than transmission speed, the apparent speed of the connection between the user station and the network is increased at modest cost.

Housel. B.C. et al.: "WebExpress: A client/intercept based system for optimizing Web browsing in a wireless environment." Mobile Networks and Applications. Baltzer Science Publishers, Bussum, NL, vol. 3, no. 3, 1998, pages 419-431, XP000998754, ISSN: 1383-469X discloses a client/intercept based model for wireless communication of web content, wherein the amount of data communicated between a client-side intercept co-resident with a mobile host and a server-side intercept process running with a wireline network is reduced via caching, differencing, protocol reduction and header reduction.

An object of the present invention is to provide a communication terminal device in which the information retrieved by a base or remote unit can be shared between the base and remote units.

To achieve the above object, according to the present invention, there is provided a communication terminal apparatus according to claim 1.

### BRIEF DESCRIPTION OF THE DRAWINGS

This and other objects and features of the present invention will become clear from the following description, taken in conjunction with the preferred embodiments with reference to the accompanying drawings in which:

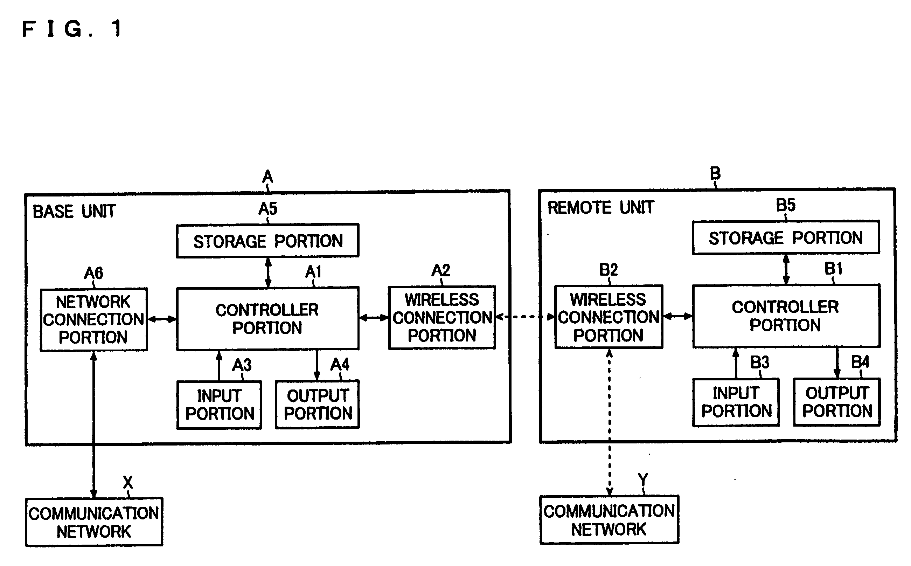

Fig. 1 is a block diagram showing an outline of the configuration of an extension telephone according to the present invention.

### DESCRIPTION OF THE PREFERRED EMBODIMENTS

Hereinafter, a communication terminal device embodying the present invention will be described, taking up as an example a browser-equipped digital cordless extension telephone that permits a microcellular telephone (such as a PHS telephone) to be registered as a remote unit. Fig. 1 is a block diagram showing an outline of the configuration of such an extension telephone according to the invention. As shown in Fig. 1, the extension telephone of this embodiment is composed of a base unit A that is connected by way of a communication network X to a WWW server (not shown) administered by a service provider or the like and at least one remote unit B (in the figure, the remote unit B) that is connected to the base unit A on a wireless basis. Thus, both the base and remote units A and B permit retrieval of information via the Internet.

As described above, the extension telephone of this embodiment is a digital cordless telephone that permits a microcellular telephone to be registered as a remote unit. Therefore, when a microcellular telephone is registered as the remote unit B as in this embodiment, the remote unit B can connect not only by way of the base unit A to the communication network X (such as an ISDN (integrated services digital network) or analog telephony network) but also directly, i.e., on its own, to another communication network Y (a wireless telephony network). In this configuration, the remote unit B can be used either as a remote terminal or as a mobile communication terminal according to the user's needs, greatly contributing to the user's convenience. It is to be noted that the remote unit B can connect by way of the base unit A to the communication network X only when the base and remote units A and B are in a state in which they can communicate with each other bidirectionally.

Next, the configuration of principal portions of the base and remote units A and B constituting the extension telephone of this embodiment will be described. First, the configuration of a principal portion of the base unit A will be described. As shown in Fig. 1, in this embodiment, the base unit A is provided with a controller portion A1 that controls the operation of the base unit A as a whole, a wireless connection portion A2 that bidirectionally communicates with the remote unit B, an input portion A3 including dial keys and browser control keys, an output portion A4 that outputs images, character-based information, voice, ringer tones, and the like, a storage portion A5 that stores information retrieved via the Internet, and a network connection portion A6 that controls connection to and disconnection from the network X, call origination, ringing, call reception, and the like. The wireless connection portion A2, input portion A3, output portion A4, storage portion A5, and network connection portion A6 described above are all connected to the controller portion A1.

Next, the configuration of a principal portion of the remote unit B will be described. As shown in Fig. 1, in this embodiment, the remote unit B is provided with a control portion B1 that controls the operation of the remote unit B as a whole, a wireless connection portion B2 that bidirectionally communicates with the base unit A and that also connects directly to the communication network Y independently of the base unit A, an input portion B3 including dial keys and browser control keys, an output portion B4 that outputs images, character-based information, voice, ringer tones, and the like, and a storage portion B5 that stores information retrieved via the Internet. The wireless connection portion B2, input portion B3, output portion B4, and storage portion B5 described above are all connected to the control portion B 1.

For easier entry of URLs by the user, the input portions A3 and B3 may be an external input device such as a keyboard or touch screen. The storage portions A5 and B5 need not be dedicated memory used solely to store information retrieved via the Internet, but may be part of general-purpose memory used in other operation. The storage portions A5 and B5 may be a removable memory.

Next, how the extension telephone of this embodiment operates when the information retrieved by the base unit A is used by the remote unit B. When a request for information retrieval is made to the base unit A, the controller portion A1 processes the URL entered through the input portion A3 so that the corresponding information is retrieved via the Internet by way of the communication network X and the network connection portion A6. The retrieved information is, on one hand, output by the output portion A4 and, on the other hand, stored in the storage portion A5 as information already retrieved on the base unit A. Here, the information may be stored not alone but along with the URLs pointing to it in the storage portion A5.

On the other hand, when a request for information retrieval is made to the remote unit B, the controller portion B1 processes the URL entered through the input portion B3, and requests the base unit A to retrieve the corresponding information via the Internet. On receiving this request from the control portion B1, the controller portion A1, before connecting to the communication network X, checks whether the information of which the retrieval is requested on remote unit B is stored in the storage portion A5 or not. If the requested information is found to be stored in the storage portion A5, that information is read out from the storage portion A5 and transmitted to the remote unit B.

If the information of which the retrieval is requested on the remote unit B is found not to be stored in the storage portion A5, the remote unit B can retrieve the desired information via the Internet by way of the communication network X, network connection portion A6, controller portion A1, wireless connection portion A2, and wireless connection portion B2.

In this configuration, when the information of which the retrieval is requested on the remote unit B has already been retrieved on the base unit A, the remote unit B can retrieve the desired information without connecting to the communication network X. This saves the user the extra time and cost required to get connected to the network and authenticated for access, and also saves the communication network an unnecessary increase in traffic.

In the extension telephone of this embodiment, when information is read out from the storage portion A5, an indication may be given saying that the information is from the information already retrieved on the base unit A. This permits the user to recognize that the information in question was retrieved in the past on the base unit A and therefore is not necessarily be up to date at the moment.

In the extension telephone of this embodiment, when information is read out from the storage portion A5, an inquiry may be made asking whether to use the information or not. This permits the user to decide by himself or herself whether to use the information already retrieved on the base unit A also on the remote unit B or retrieve up-to-date information anew via the Internet.

In the extension telephone configured as described above, the reading-out of information from the storage portion A5 may be restricted. Specifically, as to whether to share the information already retrieved on the base unit A with remote unit B or not, the user can tag each piece of the already retrieved information as either shareable or unshareable information on base unit A. It is also possible to disable the sharing of all the information already retrieved on the base unit A, or permit the sharing of the information already retrieved on the base unit A only when the user operates the remote unit B in a predetermined manner, or permit its sharing in any other manner. For those items of the already retrieved information of which the sharing is disabled, it is possible even to entirely disable their retrieval on the remote unit B, irrespective of whether from the base unit A or via the Internet. This makes it possible to flexibly cope with various situations, for example one in which the base and remote units A and B are used by different individuals and, from the viewpoint of privacy or parental considerations, sharing of the information already retrieved on the base unit A is undesirable.

In the extension telephone configured as described above, the storage portion A5 may store, as bookmarks, only the URLs pointing to the information already retrieved on the base unit A. In this case, when the remote unit B requests retrieval of information via the Internet, it reads out from the storage portion A5 the bookmarks pointing to the already retrieved information. Alternatively, when a URL is stored as a bookmark in the storage portion A5 of the base unit A, a similar bookmark is stored also in the storage portion B5 of the storage portion B5.

In this way, it is possible to share the information already retrieved on the base unit A with the remote unit B without unduly consuming the capacity of the storage portions A5 and B5. Moreover, when the remote unit B reads the stored bookmarks, there is no need to connect to the communication network or manually enter URLs, and therefore the user does not need to bear the time and cost required to get connected to the network and authenticated for access. Moreover, the desired information itself is retrieved via the Internet, and therefore it is possible to retrieve always up-to-date information.

The information already retrieved on the base unit A may be shared with the remote unit B in any other manner than specifically described above. For example, it is possible to display on the remote unit B an itemized list of the information already retrieved on the base unit A and let the user select the desired items from the list. This eliminates the need for the user to enter URLs manually, and thus greatly simplifies the operation required. In this case, it is advisable that those items of the already retrieved information which are tagged as unshareable on the base unit A be left off the list.

Next, how the extension telephone of this embodiment operates when the information retrieved by the remote unit B is used by the base unit A. When a request for information retrieval is made to the remote unit B, the controller portion B 1 processes the URL entered through the input portion B3, and requests the base unit A to retrieve the corresponding information via the Internet. On receiving this request from the control portion B1, the controller portion A1 retrieves the information via the Internet by way of the communication network X and the network connection portion A6. The retrieved information is transmitted through the wireless connection portions A2 and B2 to the remote unit B, and is, on one hand, output by the output portion B4 and, on the other hand, stored in the storage portion B5 as information already retrieved on remote unit B. In addition, in the extension telephone of this embodiment, the information already retrieved on the remote unit B is stored also in the storage portion A5 of the base unit A. Here, the information may be stored not alone but along with the URLs pointing to it in the storage portions A5 and B5.

When a request for information retrieval is made to the remote unit B functioning as a microcellular telephone, the control portion B1 processes the URL entered through the input portion B3, and retrieves the corresponding information via the Internet by way of the communication network Y and the wireless connection portion B2. The retrieved information is, on one hand, output by the output portion B4 and, on the other hand, stored in the storage portion B5 as information already retrieved on remote unit B. Thereafter, when the base and remote units A and B are brought into a state in which they can communicate with each other, the control portion B1 reads out the information stored in the storage portion B5 and transmits it to the base unit A. On receiving this information from the remote unit B, the controller portion A1 stores it in the storage portion A5 as information already retrieved on the remote unit B. Here, the information may be stored not alone but along with the URLs pointing to it in the storage portion A5.

On the other hand, when a request for information retrieval is made to the base unit A, the controller portion A1 processes the URL entered through the input portion A3, and, before connecting to the communication network X, checks whether the information of which the retrieval is requested on base unit A is stored in the storage portion A5 as information already retrieved on the remote unit B or not. If the requested information is found to be stored in the storage portion A5, that information is read out from the storage portion A5 and output by the output portion A4.

If the information of which the retrieval is requested on the base unit A is found not to be stored in the storage portion A5, the base unit A can retrieve the desired information via the Internet by way of the communication network X and the network connection portion A6.

In this configuration, when the information of which the retrieval is requested on the base unit A has already been retrieved on the remote unit B, the base unit A can retrieve the desired information without connecting to the communication network X. This saves the user the extra time and cost required to get connected to the network and authenticated for access, and also saves the communication network an unnecessary increase in traffic.

In the extension telephone of this embodiment, when information is read out from the storage portion A5, an indication may be given saying that the information is from the information already retrieved on the remote unit B. This permits the user to recognize that the information in question was retrieved in the past on the remote unit B and therefore is not necessarily be up to date at the moment.

In the extension telephone of this embodiment, when information is read out from the storage portion A5, an inquiry may be made asking whether to use the information or not. This permits the user to decide by himself or herself whether to use the information already retrieved on the remote unit B also on the base unit A or retrieve up-to-date information anew via the Internet.

In the extension telephone configured as described above, the reading-out of information from the storage portion A5 may be restricted. Specifically, as to whether to share the information already retrieved on the remote unit B with the base unit A or not, the user can tag each piece of the already retrieved information as either shareable or unshareable information on the remote unit B. It is also possible to disable the sharing of all the information already retrieved on the remote unit B, or permit the sharing of the information already retrieved on the remote unit B only when the user operates the base unit A in a predetermined manner, or permit its sharing in any other manner. For those items of the already retrieved information of which the sharing is disabled, it is possible even to entirely disable their retrieval on the base unit A, including their retrieval via the Internet. This makes it possible to flexibly cope with various situations, for example one in which the base and remote units A and B are used by different individuals and, from the viewpoint of privacy or parental considerations, sharing of the information already retrieved on the remote unit B is undesirable.

In the extension telephone configured as described above, the storage portion A5 may store, as bookmarks, only the URLs pointing to the information already retrieved on the remote unit B. In this case, when the base unit A requests retrieval of information via the Internet, it reads out from the storage portion A5 the bookmarks pointing to the already retrieved information.

In this way, it is possible to share the information already retrieved on the remove unit B with the base unit A without unduly consuming the capacity of the storage portions A5 and B5. Moreover, when the base unit A reads the stored bookmarks, there is no need to connect to the communication network or manually enter URLs, and therefore the user does not need to bear the time and cost required to get connected to the network and authenticated for access. Moreover, the desired information itself is retrieved via the Internet, and therefore it is possible to retrieve always up-to-date information.

The information already retrieved on the remote unit B may be shared with the base unit A in any other manner than specifically described above. For example, it is possible to display on the base unit A an itemized list of the information already retrieved on the remote unit B and let the user select the desired items from the list. This eliminates the need for the user to enter URLs manually, and thus greatly simplifies the operation required. In this case, it is advisable that those items of the already retrieved information which are tagged as unshareable on the remote unit B be left off the list.

The embodiment described above deals with a browser-equipped digital cordless telephone as a communication terminal device embodying the invention. It is to be understood, however, that the present invention may be implemented in any other manner than specifically described above, and that it finds wide application in communication terminal devices composed of a base unit and at least one remote unit. For example, the base and remote units may exchange signals on a wired or wireless basis, and the remote unit may or may not be provided with a means for connecting to a network on its own. The communication terminal device itself may be connected to a server on a wired or wireless basis.

## Claims

1. A communication terminal apparatus comprising:
a base unit (A) configured and adapted to be connected to a communication network (X) via a first connection and to be connected to a server by way of said communication network;
at least one remote unit (B) configured and adapted to be connected to said base unit and to allow, when connected to said base unit, connection to said communication network (X) via said first connection; and
a storage portion (A5, B5) for storing information retrieved by either of said base unit and said remote unit, wherein
said base and remote units are each configured and adapted for retrieving information from outside said communication terminal system, and, when a piece of information of which retrieval is requested on the other of said base unit and said remote unit is stored in the storage portion, said piece of information is read out from said storage portion.

2. A communication terminal apparatus as claimed in claim 1, wherein said remote unit is configured and adapted to allow, when unconnected to said base unit, connection to a communication network (Y) via a second connection that is separate from said first connection.

3. A communication terminal apparatus as claimed in claim 1 or 2, wherein, when a piece of information is read out from the storage portion, an indication is given saying that said piece of information is from already retrieved information.

4. A communication terminal apparatus in any of the preceding claims, wherein, when a piece of information is read out from the storage portion, an inquiry is made asking whether to use said piece of information or not.

5. A communication terminal apparatus as claimed in any of the preceding claims, wherein reading-out of information from the storage portion can be restricted.

6. A communication terminal apparatus as claimed in any of the preceding claims, wherein only uniform resource locators pointing to locations of information are stored in the storage portion.

7. A communication terminal apparatus as claimed in any of the preceding claims, wherein the storage portion is incorporated in the base unit.

## Patentansprüche

1. Kommunikationsendgerät mit:
einer Basisstation (A), die konfiguriert und geeignet ist, mit einem Kommunikationsnetz (X) über eine erste Verbindung und mit einem Server mittels des Kommunikationsnetzes verbunden zu sein;
mindestens einem Mobilteil (B), das konfiguriert und geeignet ist, mit der Basisstation verbunden zu sein und, wenn es mit der Basisstation verbunden ist, eine Verbindung zum Kommunikationsnetz (X) über die erste Verbindung zu ermöglichen; und
einem Speicherbereich (A5, B5) zum Speichern von Daten, die entweder von der Basisstation oder dem Mobilteil abgerufen wurden, wobei
die Basisstation und die Mobilteile jeweils konfiguriert und geeignet sind, Daten von außerhalb des Kommunikationsendgerätes abzurufen, und wobei, wenn ein Teil der Daten, deren Abruf vom jeweils anderen der Basisstation und des Endgerätes angefordert wird, im Speicherbereich gespeichert ist, der Teil der Daten aus dem Speicherbereich ausgelesen wird.

2. Kommunikationsendgerät nach Anspruch 1, wobei das Mobilteil konfiguriert und geeignet ist, eine Verbindung zu einem Kommunikationsnetz (Y) über eine zweite Verbindung, die von der ersten Verbindung getrennt ist, zu ermöglichen, wenn es nicht mit der Basisstation verbunden ist.

3. Kommunikationsendgerät nach Anspruch 1 oder 2, wobei, wenn ein Teil von Daten aus dem Speicherbereich ausgelesen wird, eine Anzeige angegeben wird, die besagt, dass der Teil von Daten aus bereits abgerufenen Daten besteht.

4. Kommunikationsendgerät nach einem der vorhergehenden Ansprüche, wobei, wenn ein Teil von Daten aus dem Speicherbereich ausgelesen wird, eine Anfrage stattfindet, ob das Teil von Daten zu verwenden ist oder nicht.

5. Kommunikationsendgerät nach einem der vorhergehenden Ansprüche, wobei das Auslesen von Daten aus dem Speicherbereich eingeschränkt werden kann.

6. Kommunikationsendgerät nach einem der vorhergehenden Ansprüche, wobei lediglich Internet-Adressen, die auf die Adressen der Daten im Internet hinweisen, im Speicherbereich gespeichert werden.

7. Kommunikationsendgerät nach einem der vorhergehenden Ansprüche, wobei der Speicherbereich in die Basisstation eingebaut ist.

## Revendications

1. Appareil de terminal de communication comprenant :
une unité de base (A) configurée et adaptée pour être connectée à un réseau de communication (X) via une première connexion et pour être connectée à un serveur par le biais dudit réseau de communication ;
au moins une unité distante (B) configurée et adaptée pour être connectée à ladite unité de base et pour permettre, lorsqu'elle est connectée à ladite unité de base, la connexion audit réseau de communication (X) via ladite première connexion ; et
une partie de stockage (A5, B5) destinée à stocker des informations recueillies par ladite unité de base ou ladite unité distante, dans lequel
lesdites unités de base et distante sont chacune configurées et adaptées pour recueillir des informations provenant de l'extérieur dudit système de terminal de communication et, lorsqu'une information dont le recueil est requis sur l'autre de ladite unité de base et de ladite unité distante est stockée dans la partie de stockage, ladite information est restituée depuis ladite partie de stockage.

2. Appareil de terminal de communication selon la revendication 1, dans lequel ladite unité distante est configurée et adaptée pour permettre, lorsqu'elle n'est pas connectée à ladite unité de base, la connexion à un réseau de communication (Y) via une deuxième connexion qui est distincte de ladite première connexion.

3. Appareil de terminal de communication selon la revendication 1 ou 2, dans lequel, lorsqu'une information est restituée depuis la partie de stockage, une indication est donnée précisant que ladite information fait partie d'informations déjà recueillies.

4. Appareil de terminal de communication selon l'une quelconque des revendications précédentes, dans lequel, lorsqu'une information est restituée depuis la partie de stockage, une demande est faite afin de savoir s'il faut utiliser ladite information ou non.

5. Appareil de terminal de communication selon l'une quelconque des revendications précédentes, dans lequel la restitution des informations depuis la partie de stockage peut être restreinte.

6. Appareil de terminal de communication selon l'une quelconque des revendications précédentes, dans lequel seuls des localisateurs de ressources uniformes indiquant des emplacements d'informations sont stockés dans la partie de stockage.

7. Appareil de terminal de communication selon l'une quelconque des revendications précédentes, dans lequel la partie de stockage est incorporée dans l'unité de base.
